Europäisches Patentamt

European Patent Office

Office européen des brevets

(11) Publication number: 0 423 396 A2

# EUROPEAN PATENT APPLICATION

(21) Application number: 89123553.3

(22) Date of filing: 20.12.89

(51) Int. Cl.5: B01D 19/00

(30) Priority: 06.10.89 JP 259996/89

(43) Date of publication of application:
24.04.91 Bulletin 91/17

(84) Designated Contracting States:
DE FR GB

(71) Applicant: Mitsubishi Oil Company, Limited
no. 2-4, Toranomon 1-chome
Minato-ku Tokyo(JP)

(72) Inventor: Yano, Hisashi
1019-233, Aza Araisawa Kudencho Sakae-ku
Yokohama-shi Kanagawa(JP)
Inventor: Yabumoto, Yunsuke
48-8, Nakaechi
Atsugi-shi Kanagawa(JP)

(74) Representative: Füchsle, Klaus, Dipl.-Ing. et al
Hoffmann . Eitle & Partner Patentanwälte
Arabellastrasse 4
W-8000 München 81(DE)

(54) Device for removing bubbles from liquid.

(57) The present invention relates to a device for removing bubbles from a liquid, such as the lubricating oil of an engine. The device includes a vortex flow chamber (5) whose diameter decreases from the upstream to the downstream direction of a liquid supplied thereto. Liquid introduction pipes (4) or holes are provided on the outermost periphery of one end of the vortex flow chamber (5) in a direction tangential thereto and a bubble removing pipe (7) penetrates the one end of the vortex flow chamber (5) along the central axis of the chamber (5). Liquid lead-out pipes or holes (9) are provided in the wall of the vortex flow chamber (5).

FIG. 2

EP 0 423 396 A2

# DEVICE FOR REMOVING BUBBLES FROM LIQUID

## BACKGROUND OF THE INVENTION

The present invention relates to a device for supplying a liquid from which bubbles have been removed, and more particularly to a device relatively small in size for continuously removing bubbles from a liquid with high efficiency thereby to supply a liquid layer containing less bubbles.

Liquids such as lubricating oils, engine oil, hydraulic oil, turbine oil and compressor oil, which are often supplied while being stirred, and liquids containing surface active agents such as emulsifying liquids and coating liquids are, in general, allowed to flow with bubbles contained therein.

If such a liquid contains bubbles in a high concentration, its performance is lowered, thus causing various problems. For instance, in the case of engine lubricating oil, when the speed of the engine rotation is increased, the number of bubbles contained in the oil in the oil pan is also increased. When the oil containing bubbles is supplied to engine parts by an oil pump, hydraulic devices may operate unsatisfactorily resulting noise, or wear and seizure at lubricated parts may be accelerated. In another case, if a sizing-agent emulsion liquid, as may be used in the manufacture of paper, contains a large number of bubbles, the sizing effect is reduced.

On the other hand, in order to increase the output of an engine, it has been the recent technological trend to increase the speed of the engine rotation. An increased engine speed requires quick hydraulic response and sufficient lubricity of an engine oil. However, being agitated at high speed by various parts of the engine, the engine oil is caused to contain an increased number of bubbles, with the result that the above-described hydraulic response or lubricity of the oil is lowered. There has been a strong demand for overcoming these difficulties.

Bubble removing devices have been disclosed in U.S. Patents Nos. 4,548,622 and 4,585,465. In each of these conventional devices, the bubbles in a liquid are caused to congregate by application of centrifugal force, after which the liquid together with the bubbles is delivered into a tank where the bubbles are removed from the top of the liquid. That is, in such devices, the bubbles are removed after the congregated bubbles have been delivered to the thank. These devices are not though effective in removing bubbles from a sizing agent for paper or in removing bubbles from engine lubricating oil on the way of flow in a pipe line. Thus, there has been a strong demand for the provision of a technique of removing bubbles from the liquid in the supply line.

## SUMMARY OF THE INVENTION

Overcoming the above problems, a bubble removing device according to the invention comprises:

(a) a closed vortex flow chamber of which cross-sectional view of right-angular to the central axis is circular whose diameter is decreased continuously or stepwise from upstream to downstream of a liquid to be handled thereby, wherein a single or plural liquid introducing pipes or liquid introducing holes are provided on the outermost periphery of one end of the vortex flow chamber in a direction tangential thereto,

(b) a bubble-removing pipe penetrating the one end of the vortex flow chamber along the central axis thereof, and

(c) a single or plural liquid lead-out pipes or liquid lead-out holes provided in the wall of the vortex flow chamber.

## BRIEF DESCRIPTION OF THE DRAWINGS

Fig. 1 is an explanatory diagram showing paths of oil flow when a bubble removing device is applied to an engine;

Fig. 2 is a sectional diagram showing an example of a bubble removing device according to the invention; and

Fig. 3 is a sectional view showing another example of a bubble removing device according to the invention.

## DESCRIPTION OF THE PREFERRED EMBODIMENTS

In the bubble removing device of the invention, the diameter of the vortex flow chamber decreases from upstream to downstream of the liquid to be handled thereby, whereby bubbles can be removed from the liquid with high efficiency. This will be described in more detail.

It is assumed that a small mixture of liquid and gas, of which masses are $m_l$ and $m_g$ respectively, is located at a radius r, and it turns at an angular velocity $\omega$. In this case, the separation ability S of $m_l$ and $m_g$ is expressed as the difference between the centrifugal forces thereof, that is

$$S = m_l r\omega^2 - m_g r\omega^2$$
$$= r\omega^2(m_l - m_g) \qquad (1)$$

In general, $m_l \gg m_g$. Therefore, equation (1) can be approximated as follows:

$$S \simeq r\omega^2 m_l \qquad (2)$$

Equation (2) indicates that the separation ability S is proportional to $(r\omega^2)$. As described above, the vortex flow chamber is smaller in diameter towards downstream. Therefore, as the liquid block containing bubbles moves down the vortex flow chamber, its angular velocity $\omega$ is increased because the radius r is decreased. The separation ability S is greatly increased because $\omega$ enhances the separation ability S in the order of the second power while r does in the order of the first power as shown in equation (2).

Thus, according to the invention, the bubbles and the liquid can be separated from each other substantially instantaneously in a continuous mode.

As conducive to a full understanding of the invention, specific examples thereof will be described. However, it goes without saying that the invention is not limited thereto or thereby.

Example 1:

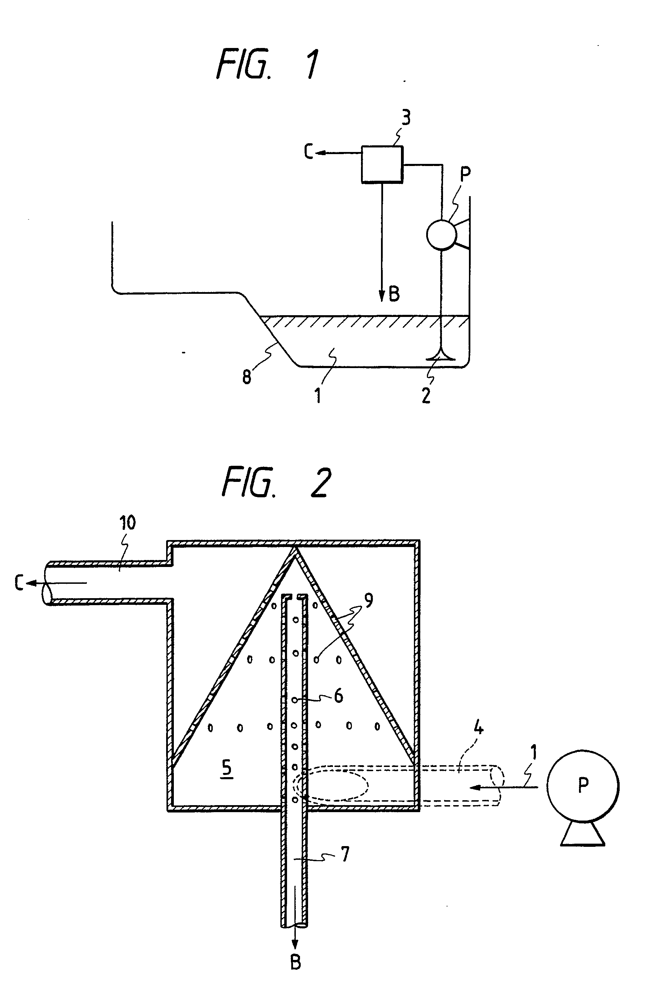

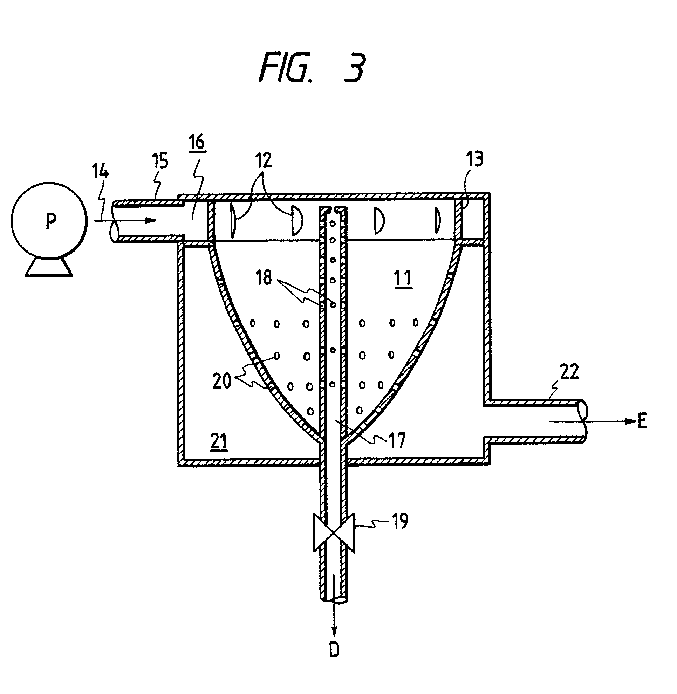

A bubble removing device according to the invention was constructed as shown in Figs. 1 and 2. It was installed on a vehicle downstream of a vehicle engine lubricating oil supplying pump P to test the performance of the engine. Engine lubricating oil 1 containing bubbles was sucked through an oil screen 2 by the pump P, and then pumped to the bubble removing device 3. In the bubble removing device, the oil was caused to flow through an oil initroduction pipe 4 into a vortex flow chamber 5 in a tangential direction at high speed, whereby the oil was separated into a first oil layer B containing bubbles at high concentration and a second oil layer C containing bubbles at low concentration. The first oil layer B around the central axis was returned through bubble removing holes 6 and a bubble removing pipe 7 to an oil pan 8, while the second oil layer C was supplied through oil lead-out holes 9 and an oil outlet pipe 10 to the engine parts to be lubricated.

Through experiment it was found that engine lubricating oil containing 8% air by volume (at a temperature of 15°C and at a pressure of one atmosphere) could be divided into a first oil layer B containing 24% air by volume and a second oil layer C containing 0.8% air by volume using the bubble removing device of the invention. The engine was run smoothly for 200 hours with a 95% load and at a speed of 6000 rpm.

Example 2:

Fig. 3 shows another example of a bubble removing device constructed according to the invention. The device was installed on a downstream of a turbine lubricating oil supplying pump P to test the performance of the turbine. In this embodiment, the wall of a vortex flow chamber 11 was made similar to a part of a parabola. In the bubble removing device, oil introducing holes 12 were formed by forming eight cuts in the cylindrical portion of the vortex flow chamber 11 and pushing the cut portions inward by pressing. Turbine oil 14 containing bubbles was supplied by the pump P under pressure. The oil was caused to flow through an oil introduction pipe 15, a first chamber 16, and the oil introducing holes 12 into the vortex flow chamber 11 in a direction tangential thereto. The bubbles collected near the center of the vortex flow chamber were conveyed into a bubble removing pipe 17 through bubble removing holes 18 formed therein, and was discharged through a relief valve 19, while the turbine oil containing no bubbles, being located along the wall of the vortex flow chamber 11, was caused to flow through a number of oil lead-out holes 20 formed in the wall, a second chamber 21, and a oil outlet pipe 22 to predetermined parts of the turbine for lubrication.

It was found through experiment that turbine oil 14 containing 5% air by volume (at a temperature of 15°C at one a pressure of one atmosphere) can be divided into a layer of turbine oil containing 23% air and a layer of turbine oil containing 0.4% air.

As is apparent from the above-described Examples 1 and 2, the inventive bubble removing device can remove more than 90% of bubbles from a liquid. Thus, the use of the inventive device provides the following effects or merits:

In the case of an internal combustion engine or external combustion engine, the installed hydraulic devices will operate stably and the sliding components of the engine will be sufficiently lubricated to protect them from wear and seizure, thus lengthening the service life of the engine.

Also, any hydraulic systems can be operated stably as a whole since the operating system and the control system can use oil from which bubbles have been removed.

By treating turbine oil or compressor oil with the device of the invention, bearings sliding at high speed are sufficiently lubricated, which increases the service life of the machine.

In the case of hydraulic oil, turbine oil or compressor oil, lubricating oil passed through the bubble removing pipe may be subjected to a secondary treatment, for instance, vacuum degasification or on-plate-flow degasification, thereby to minimize the number of bubbles taken into the oil. These methods are effective in increasing the oxidation resistance of the oil.

The bubble removing device of the invention is applicable to liquids containing surface active agents such as sizing agents and coating agents. In such cases, the surface of the paper being manufactured can be finished uniformly, and a variety of uniform films can be produced. Thus, various difficulties in quality control can be eliminated with the use of the invention.

## Claims

1. A device for removing bubbles from a liquid, comprising:

(a) a closed vortex flow of which cross-sectional view of right-angular to the central axis is circular whose diameter decreases from upstream to downstream of a liquid supplied thereto, at least one liquid introducing passage being provided on an outermost periphery of one end of said vortex flow chamber in a direction tangential thereto,

(b) a bubble removing pipe penetrating said one end of said vortex flow chamber along a central axis thereof, and

(c) at least one liquid lead-out passage provided in a wall of said vortex flow chamber.

2. The device as claimed in claim 1, wherein said liquid introducing passage is formed in a substantially cylindrical part of said vortex flow chamber.

3. The device as claimed in claim 1, wherein said liquid lead-out passages are holes formed in said wall of said vortex flow chamber having a diameter in a range of 0.5 to 10 mm, and said liquid lead-out holes are arranged over the wall of said vortex flow chamber at equal intervals and in a plurality of lines.

4. The device as claimed in claim 3, where said diameter is in a range of 1.0 to 5.0 mm.

5. The device as claimed in claim 1, wherein said bubble removing pipe provided along the central axis of said vortex flow chamber is in the form of a cylinder having one end in said vortex flow chamber, and a plurality of bubble removing holes 0.5 to 5.0 mm in diameter are formed in the wall of said bubble removing pipe at equal intervals and in a plurality of lines.

6. The device of claim 5, wherein said diameter of said bubble receiving holes is in a range of 1.0 to 3.0 mm.

7. The device as claimed in claim 1, further surrounded by casing walls of which inner space between said walls and said device are separated into a first chamber for introducing bubble-containing liquid and a second chamber for collecting bubble-free liquid.

8. The device as claimed in claim 7, wherein an introduction pipe is disposed on said casing wall to communicate with said first chamber and an outlet pipe is disposed on said casing wall to communicate with said second chamber.

FIG. 1

FIG. 2

# FIG. 3